# EUROPEAN PATENT APPLICATION

(11) **EP 4 811 139 A1**
(43) Date of publication of application: **23.09.2026**
(21) Application number: 26165671.4
(22) Date of filing: 18.03.2026
(51) Int. Cl.: G06F 11/34

(54) **DATA COLLECTION METHOD, DATA TRANSMISSION APPARATUS, AND DATA COLLECTION SYSTEM**

(30) Priority: 21.03.2025 JP 2025046471
(71) Applicant: Seiko Epson Corporation, Tokyo 160-8801 (JP)
(72) Inventor: TAKAGOSHI, Nanako, Suwa-shi, Nagano, 392-8502 (JP); KUBO, Toshihiro, Suwa-shi, Nagano, 392-8502 (JP); ADACHI, Mamoru, Suwa-shi, Nagano, 392-8502 (JP); NAKADAIRA, Michio, Suwa-shi, Nagano, 392-8502 (JP)
(74) Representative: MERH-IP Matias Erny Reichl Hoffmann Patentanwälte PartG mbB

(57) **Abstract**

A data collection method for collecting data from a data transmission apparatus that receives a predetermined input while a predetermined software program is running, includes a first transmission step of transmitting, when the data transmission apparatus is in an on-line state in which the data transmission apparatus is connected to an external data collection section via a network, input data indicating content of the latest input, to the data collection section, and a second transmission step of transmitting, when the data transmission apparatus is switched from an off-line state in which the data transmission apparatus is not connected to the data collection section to the on-line state, summary data including a cumulative number of inputs for each of the input content during a period in which the data transmission apparatus is in the off-line state, to the data collection section.

## Description

The present application is based on, and claims priority from JP Application Serial Number 2025-046471, filed March 21, 2025, the disclosure of which is hereby incorporated by reference herein in its entirety.

### BACKGROUND

### 1. Technical Field

The present disclosure relates to a data collection method, a data transmission apparatus, and a data collection system.

### 2. Related Art

JP-A-2020-177592 discloses a computer capable of switching between an on-line state in which the computer is connected to a server via a network and an off-line state in which the computer is not connected to the server.

In an information processing apparatus, such as a computer, while a predetermined software program is running, various inputs performed by operating an input section, such as a keyboard or a mouse, are received and predetermined processes are performed in the software program in accordance with contents of the inputs. In addition, there is a demand for connecting the information processing apparatus to an external data collection section, such as a server, via a network and collecting data relating to a use state of the software program by the data collection section.

However, as disclosed in JP-A-2020-177592, the information processing apparatus may enter an off-line state in which the information processing apparatus is not connected to the data collection section, and in the off-line state, the information processing apparatus may not transmit data to the data collection section. Therefore, it is difficult to collect data regarding a use state of the software program during the period of the off-line state. Furthermore, even when detailed data related to the use state of the software program is accumulated in the information processing apparatus during the period of the off-line state and the accumulated data is to be transmitted to the data collection section at a time of returning from the off-line state to the on-line state, a load of communication between the information processing apparatus and the data collection section increases, and the transmission is difficult depending on an amount of the accumulated data.

### SUMMARY

According to an aspect of the present disclosure, a data collection method for collecting data from a data transmission apparatus that receives a predetermined input related to a predetermined software program while the software program is running, includes a first transmission step of transmitting, when the data transmission apparatus is in an on-line state in which the data transmission apparatus is connected to an external data collection section via a network, input data indicating a content of the latest input, from the data transmission apparatus to the data collection section, and a second transmission step of transmitting, when the data transmission apparatus is switched from an off-line state in which the data transmission apparatus is not connected to the data collection section to the on-line state, summary data including a cumulative number of inputs for each of the input content during a period in which the data transmission apparatus is in the off-line state, from the data transmission apparatus to the data collection section.

According to another aspect of the present disclosure, a data transmission apparatus includes a receiver that receives a predetermined input related to a predetermined software program while the software program is running, a communication section that is connectable to an external data collection section via a network, and a transmission controller that transmits, when an on-line state is entered in which the communication section is connected to the data collection section via the network, input data indicating a content of the latest input to the data collection section via the communication section and transmits, when the communication section is switched from an off-line state in which the communication section is not connected to the data collection section to the on-line state, summary data including a cumulative number of inputs for each of the input content during a period of the off-line state to the data collection section via the communication section.

According to a further aspect of the present disclosure, a data collection system includes a data collection section, and a data transmission apparatus. The data transmission apparatus includes a receiver that receives a predetermined input related to a predetermined software program while the software program is running, a communication section that is connectable to the data collection section via a network, and a transmission controller that transmits, when an on-line state is entered in which the communication section is connected to the data collection section via the network, input data indicating a content of the latest input to the data collection section via the communication section and transmits, when the communication section is switched from an off-line state in which the communication section is not connected to the data collection section to the on-line state, summary data including a cumulative number of inputs for each of the input content during a period of the off-line state to the data collection section via the communication section.

### BRIEF DESCRIPTION OF THE DRAWINGS

FIG. 1 is a perspective view schematically illustrating a data collection system according to an embodiment of the present disclosure.
FIG. 2 is a block diagram illustrating the data collection system of FIG. 1.
FIG. 3 is a flowchart of a data collection method according to an embodiment of the present disclosure.

### DESCRIPTION OF EMBODIMENTS

Hereinafter, an embodiment of the present disclosure will be described with reference to the drawings. Note that the following description does not limit the technical range or the meaning of the terms described in the claims. In addition, the dimensional ratios of the drawings are exaggerated for convenience of description and may be different from the actual ratios.

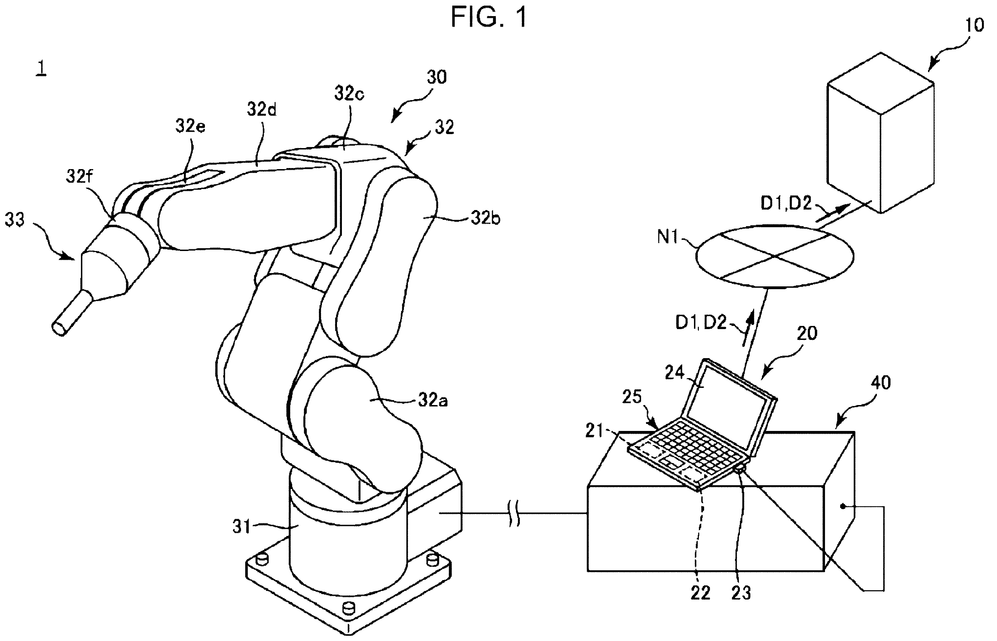

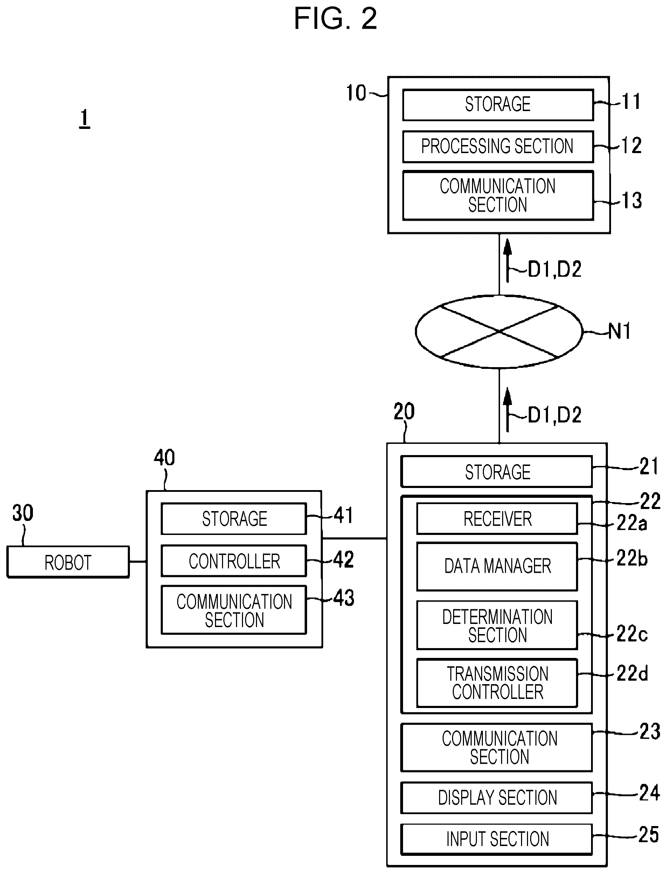

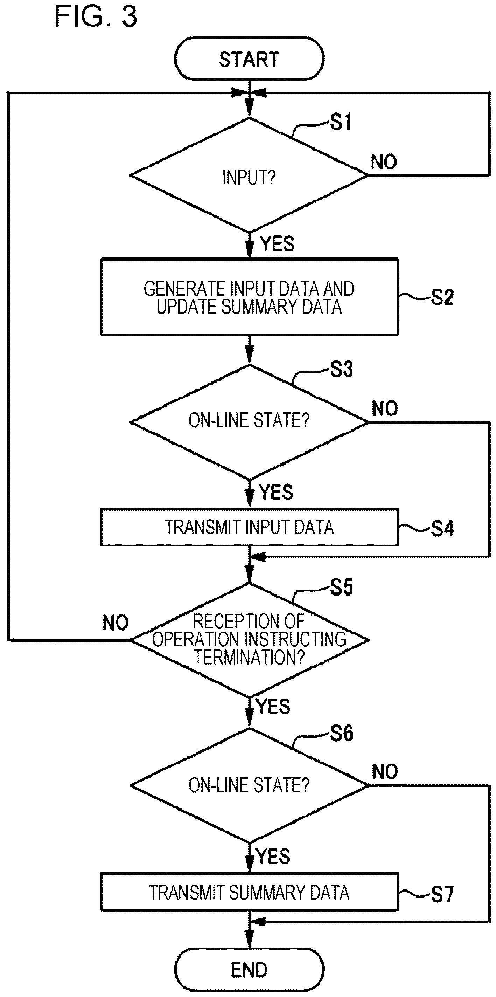

FIG. 1 is a perspective view schematically illustrating a data collection system 1 according to this embodiment. FIG. 2 is a block diagram illustrating the data collection system 1 of FIG. 1. FIG. 3 is a flowchart of a data collection method according to this embodiment.

The data collection system 1 according to this embodiment includes a data collection section 10 and a data transmission apparatus 20 connectable to the data collection section 10 via a network N1.

As will be described in detail later, while a predetermined software program is running, the data transmission apparatus 20 receives an input related to the software program, and transmits use data indicating a type of input that has been made to the data collection section 10. The data collection section 10 is connected to a plurality of data transmission apparatuses 20, and collects use data from the individual data transmission apparatuses 20. Note that, in FIG. 1, one of the plurality of data transmission apparatuses 20 is illustrated, and the other data transmission apparatuses 20 are omitted. A data collector, such as a developer of the software program, can efficiently perform, for example, analysis of a use state of the software program of a user (customer), improvement of the software program, or the like with reference to the collected use data.

Here, examples of the "predetermined software program" include, but are not particularly limited to, system software for performing basic management and control of the data transmission apparatus 20 and application software for a specific purpose. Examples of the system software include, but are not particularly limited to, an operating system (OS) and firmware. Examples of the application software include, but are not particularly limited to, software for generating, viewing, and editing various types of data, such as characters, numerical values, sounds, images, and moving images, and a support software program for supporting teaching of operations to a robot 30, which will be described later, and management of the robot 30 and peripheral devices of the robot 30. Hereinafter, the support software program is also simply referred to as "support software".

Hereinafter, an example will be described in which the support software is installed in the data transmission apparatus 20, an input related to the support software is received while the support software is running, and use data indicating a type of the input that has been made is transmitted to the data collection section 10. That is, in this embodiment, the support software corresponds to the "predetermined software program". However, the "predetermined software program" is not limited to the support software.

In this embodiment, the data transmission apparatus 20 is also a teaching device that teaches an operation to the robot 30. The data transmission apparatus 20 is connected to a control device 40 that controls operation of the robot 30. Note that the robot 30 and the control device 40 may or may not be components of the data collection system 1. Hereinafter, the robot 30, the control device 40, the data transmission apparatus 20, and the data collection section 10 will be described.

First, the robot 30 will be described.

As illustrated in FIG. 1, the robot 30 is an industrial single-arm six-axis vertical articulated robot. However, a type of the robot 30 is not limited to the above, and may be, for example, a double-arm articulated robot, a horizontal articulated robot, or a mobile robot. In this embodiment, the robot 30 includes a base 31 and a robot arm 32.

The base 31 is a support body that supports the robot arm 32. The base 31 is fixed to a floor, a ceiling, or the like in a factory, for example.

The robot arm 32 includes an arm 32a, an arm 32b, an arm 32c, an arm 32d, an arm 32e, and an arm 32f. The arm 32a is disposed above the base 31 and is swingably coupled to the base 31. Furthermore, the plurality of arms 32a to 32f are connected in this order from a proximal end side toward a distal end side. Each of the arms 32a to 32f is swingably connected to the adjacent one of the arms.

The robot 30 further includes driving sections (not illustrated) that swingably drive the arms 32a to 32f. Each of the driving sections includes a motor that generates a driving force for swingably driving a corresponding one of the arms, a speed reducer that reduces an output of the motor, and a motor driver that drives the motor. Each of the driving sections is electrically connected to the control device 40 via the base 31.

Furthermore, the robot 30 includes various sensors capable of detecting rotation amounts, angles, torques, and the like of the individual arms 32a to 32f. The various sensors are electrically connected to the control device 40 via the base 31.

An end effector 33 can be attached to a distal end portion of the robot arm 32, that is, a distal end portion of the arm 32f. The end effector 33 may be a component of the robot 30 or may not be a component of the robot 30. The robot 30 adjusts a position of the end effector 33 by driving the robot arm 32, and performs work, such as transporting, manufacturing, processing, assembly, and coating of a workpiece (work target) using the end effector 33. A type of the end effector 33 is not particularly limited, and examples thereof include a hand that holds a workpiece by gripping or suction, a processing machine, such as a polishing machine, a grinding machine, or a cutting machine, a coating device, such as a spray gun, and a tool, such as a driver or a wrench.

Next, the control device 40 will be described.

As illustrated in FIG. 1, the control device 40 is installed outside the robot 30. However, the control device 40 may be incorporated in the base 31 or the like of the robot 30. The control device 40 has a function of controlling operations of the individual sections of the robot 30. As illustrated in FIG. 2, the control device 40 includes a storage 41, a controller 42, and a communication section 43. These components are connected to each other via a bus.

The storage 41 includes a memory, such as a random access memory (RAM) and a read only memory (ROM). The storage 41 stores various programs, such as a control program for controlling the operation of the robot 30 and various data.

The controller 42 is constituted by at least one processor, such as a central processing unit (CPU). The controller 42 reads and executes the various programs stored in the storage 41.

The communication section 43 includes various interfaces capable of communicating with external devices, such as the robot 30 and the data transmission apparatus 20. The communication section 43 includes an interface circuit. The communication section 43 transmits and receives information and signals to and from an external device. The communication between the communication section 43 and an external device may be communication via a network, such as a local area network (LAN) or the Internet. Furthermore, a form of the communication may be a wired communication or a wireless communication.

Next, the data transmission apparatus 20 will be described.

The data transmission apparatus 20 is configured by a computer, such as a personal computer, a tablet terminal, a smartphone, or a teaching pendant. As illustrated in FIGS. 1 and 2, the data transmission apparatus 20 includes a storage 21, a processing section 22, a communication section 23, a display section 24, and an input section 25. These are connected to each other via a bus.

The storage 21 is configured by memories, such as a RAM and a ROM. The storage 21 stores various programs, such as support software, and various types of data, such as input data D1 and summary data D2 described later. The support software supports teaching of an operation to the robot 30 and management of the robot 30 and peripheral devices of the robot 30. More specifically, the support software has a function of teaching an operation to the robot 30 and a function of arranging a virtual robot imitating the robot 30, a virtual workpiece imitating a workpiece, and the like in a virtual space and simulating the arrangement, operation, and the like of the virtual robot and the virtual workpiece. The support software further has a function of diagnosing a degree of wear of components included in the robot 30 and a function of controlling and managing the robot 30 and the peripheral devices of the robot 30. Examples of the peripheral devices of the robot 30 include various sensors and various safety devices.

The processing section 22 is constituted by at least one processor, such as a CPU. The processing section 22 reads and executes various programs stored in the storage 21.

The communication section 23 includes various interfaces capable of communicating with external devices, such as the control device 40 and the data collection section 10. The communication section 23 includes an interface circuit. The communication section 23 transmits and receives information and signals to and from an external device. The communication between the communication section 23 and an external device may be communication via the network N1, such as a LAN or the Internet. Furthermore, a form of the communication may be a wired communication or a wireless communication. In this embodiment, the communication section 23 can be connected to the data collection section 10 via the network N1.

The display section 24 includes, for example, a display, such as a liquid crystal panel or an organic electro luminescence (EL) panel. The display section 24 displays required information while the support software is running.

The input section 25 includes, for example, a keyboard, a touch pen, a touch pad, a mouse, and a voice input device, such as a microphone. The user can input or select desired information by operating the input section 25. Note that the display section 24 may be configured by a touch panel so that the display section 24 has a function of the input section 25.

Here, a function of transmitting, from the processing section 22 to the data collection section 10, use data regarding a type of input performed while the support software is running will be described in detail. As illustrated in FIG. 2, the processing section 22 includes a receiver 22a, a data manager 22b, a determination section 22c, and a transmission controller 22d.

The receiver 22a receives an input by a user operating the input section 25 or the like while the support software is running. Specifically, when the user activates the support software by operating the input section 25, the receiver 22a displays a program window including a start-up screen on the display section 24. Then, the receiver 22a receives an input by the user operating the input section 25.

Content of the input is not particularly limited, but includes, for example, switching of the display screen in the program window, selection of various items in the display screen, inputting and editing of various types of data, such as characters, numerical values, signs, and graphics via the display screen, arrangement, selection, and movement of various objects in the display screen, and change of layout of the display screen. Note that the content of the input varies depending on a type and a function of a target software program, and the above is merely an example.

The display screen is not particularly limited, but examples thereof include a start-up screen for the support software, a setting screen for data relating to teaching of an operation to the robot 30, a simulation screen displaying a virtual space including a virtual robot, a virtual workpiece, and the like, a maintenance screen indicating a degree of wear of the components included in the robot 30, a management screen for the robot 30 and the peripheral devices of the robot 30, and a manual screen for the robot 30 or the support software. Note that the display screen differs depending on a type and a function of a target software program, and the above is merely an example.

The data manager 22b generates input data D1 indicating content of one input, and updates summary data D2 including the total number of inputs for each input content. Each of the input data D1 and the summary data D2 is use data indicating a type of input that has been made.

The input data D1 includes information for specifying content of a single input and a time stamp indicating a time point at which the input is performed. A format of the input data D1 is not particularly limited, and may be, for example, a text data format or a binary data format. The data format of the input data D1 may be changed before and after the transmission to the data collection section 10. The information for specifying content of a single input is not particularly limited, but examples thereof include an operation log indicating a type of operation that has been performed and a display screen on which the operation is performed, a type (parameter) of data which has been input or edited and input content or edited content (value of the parameter) of the data, and a portion (fragment) viewed in a manual when the manual is viewed.

Although the input or edited data is different depending on a type and a function of a target software program, in this embodiment, command values, such as a rotation amount, a rotation speed, and a torque of each of the arms 32a to 32f of the robot 30 and the end effector 33, and setting values, such as a teaching point indicating a position on a trajectory of a control point of the robot 30 when the robot 30 is operated are exemplified. Note that the control point serves as a reference for operation of the robot 30, and is often set at a distal end of the robot arm 32 or a distal end of the end effector 33.

In the support software according to this embodiment, inputs are classified into "simple operation", "manual viewing", and "inputting or editing of data", and information to be included in the input data D1 is changed according to the classification. The "simple operation" corresponds to a case where an input is selection of an item other than viewing of the manual in the program window. The "manual viewing" corresponds to an operation of viewing a manual of the robot 30 or the support software. The term "inputting or editing of data" corresponds to a case where an input indicates inputting or editing of data using the support software, that is, inputting or editing of a setting value described above. However, the input classification method is not limited to the above, and can be appropriately set in accordance with a type or a function of a target software program. Alternatively, the inputs may not be classified.

When an input is classified into "simple operation", the data manager 22b generates input data D1 including a time stamp and an operation log indicating a selected item. As a matter of course, even when the classification of the input is the same "simple operation", specific content of the operation log in the input data D1 differs depending on detailed content of the input, such as a type of the selected item.

When an input is classified into "manual viewing", the data manager 22b generates input data D1 including a time stamp, an operation log indicating manual viewing, and a fragment name indicating a fragment viewed in the manual. As a matter of course, even when the classification of the input is the same "manual viewing", a specific fragment name in the input data D1 differs depending on detailed content of the input, such as a viewed fragment.

When an input is classified into "inputting or editing of data", the data manager 22b generates input data D1 including a time stamp, a type of input or edited data, and content of inputting or content of editing of the data.

Note that it is not necessary for the data manager 22b to generate input data D1 for all inputs performed in relation to the support software, and whether to generate input data D1 may be set in advance according to contents of the inputs. For example, when a type of input is "inputting or editing of data", the data manager 22b may not generate input data D1.

In this embodiment, the data manager 22b generates input data D1 each time an input is made, and stores the input data D1 in the storage 21.

In this way, one input data D1 indicates content of a single input. Therefore, when the data collection section 10 acquires a plurality of pieces of input data D1, in particular, a series of pieces of input data D1 or pieces of input data D1 in time series, the data collector can efficiently grasp a time-series detailed use state of the support software, including an order of inputs and types of inputs performed by the data transmission apparatuses 20.

In this embodiment, the summary data D2 indicates the total number of inputs for each input content corresponding to "simple operation" and "manual viewing" after the support software is installed and activated for the first time. That is, in the summary data D2, for each input content, a cumulative number of times the content is input is associated. Therefore, in this embodiment, the "simple operation" and the "manual viewing" correspond to "predetermined input" which is a generation target of the input data D1 and an update target of the summary data D2. However, the "predetermined input" which is the generation target of the input data D1 and the update target of the summary data D2 is not limited to "simple operation" and "manual viewing", and may be only one of them, for example. A format of the summary data D2 is not particularly limited, but may be, for example, a text data format or a binary data format. The data format of the summary data D2 before transmission to the data collection section 10 may be different from that after the transmission.

Specifically, for example, for "simple operation", the summary data D2 includes a plurality of items selectable on the display screen and the total numbers of times the items are selected. In addition, the summary data D2 includes a plurality of fragments that can be viewed in the manual and the total numbers of times the fragments are viewed, for example, with respect to "manual viewing".

In this embodiment, each time an input is made, the data manager 22b updates the summary data D2 stored in the storage 21. Here, to update the summary data D2 indicates to increase the number of times of input corresponding to content of the latest input by the number of the latest input, that is, by one.

In this way, the summary data D2 indicates a cumulative number of inputs for each content of input performed so far. Therefore, when the data collection section 10 acquires the summary data D2, the data collector can efficiently grasp statistics of use states of the support software, such as an input content with a large number of inputs, that is, an input content with a high demand, for each data transmission apparatus 20 or for a plurality of data transmission apparatuses 20.

Note that the summary data D2 may include the contents of all inputs performed with respect to the support software, or may include inputs of contents that are not included in the summary data D2. For example, in a case where a type of input is "simple operation", an input of content to be included in the summary data D2 and an input of content not to be included in the summary data D2 may be set in advance according to the importance of content of the simple operation.

Furthermore, an update timing of the summary data D2 is not limited to the above. For example, the summary data D2 may be updated at predetermined time intervals, or may be updated at a timing at which a predetermined operation or a predetermined process is performed, such as a timing at which the user operates the input section 25 to issue an instruction to terminate the support software or a timing at which the support software is activated. When the summary data D2 is not updated each time an input is made, the data manager 22b can update the summary data D2 based on the past input data D1 in the storage 21.

The determination section 22c discriminates between an on-line state in which the communication section 23 is connected to the data collection section 10 via the network N1 and an off-line state in which the communication section 23 is not connected to the data collection section 10.

In the on-line state, the transmission controller 22d transmits the input data D1 indicating content of the latest input to the data collection section 10 via the communication section 23.

To be more specific, in the case of the on-line state, the transmission controller 22d transmits input data D1 generated between a preceding transmission and a current transmission to the data collection section 10 at a predetermined time interval. The latest input data D1 is included in the input data D1 generated between the preceding transmission and the current transmission. The predetermined time interval is not particularly limited, but is preferably 30 seconds or more and 1 hour or less, more preferably 30 seconds or more and 30 minutes or less, and still more preferably 30 seconds or more and 10 minutes or less.

Thus, the data collection section 10 can acquire the input data D1 during a period of the on-line state. Therefore, the data collector can efficiently grasp a time-series detailed use state of the support software during the period of the on-line state for each data transmission apparatus 20.

Note that the timing at which the input data D1 is transmitted to the data collection section 10 is not limited to the above. For example, the input data D1 may be transmitted to the data collection section 10 each time the input data D1 is generated, or may be transmitted to the data collection section 10 at a timing at which a predetermined operation or a predetermined process is performed, such as a timing at which the user operates the input section 25 to instruct termination of the support software or a timing at which the support software is activated.

In the off-line state, the transmission controller 22d does not transmit the input data D1 to the data collection section 10. In the off-line state, the data manager 22b generates input data D1 each time an input is made, so that the input data D1 is accumulated in the storage 21. Hereinafter, the untransmitted input data D1 which has been accumulated in the storage 21 during the period of the off-line state is also simply referred to as "input data D1 accumulated during the period of the off-line state".

In a case where the off-line state is switched to the on-line state, the transmission controller 22d transmits at least a portion of the input data D1 accumulated during the period of the off-line state to the data collection section 10. Here, examples of the "case where the off-line state is switched to the on-line state" include not only a case where the off-line state is switched to the on-line state during a single execution of the support software but also a case where the support software is activated during the off-line state and the off-line state is switched to the on-line state at a time of the next and subsequent activations of the software.

To be more specific, in the case where the off-line state is switched to the on-line state, the transmission controller 22d determines whether to thin out a portion of the untransmitted input data D1 in accordance with an accumulation period of the input data D1 accumulated during the period of the off-line state. When the accumulation period is equal to or shorter than a predetermined period, the transmission controller 22d transmits all the input data D1 accumulated during the period of the off-line state to the data collection section 10. When the accumulation period exceeds the predetermined period, the transmission controller 22d transmits, to the data collection section 10, a portion of the input data D1 accumulated during the period of the off-line state, the portion being within a period going back from a current time by the predetermined period.

This makes it possible to adjust an amount of the input data D1 to be transmitted from the data transmission apparatus 20 to the data collection section 10 when the off-line state is switched to the on-line state. As a result, a communication time between the data transmission apparatus 20 and the data collection section 10 can be shortened, and a communication load can be suppressed. Accordingly, the data collection section 10 can acquire at least a portion of the input data D1 accumulated during the period of the off-line state. Therefore, the data collector can efficiently grasp a time-series detailed use state of the support software, such as an order of inputs, for each data transmission apparatus 20, even in at least a portion of the off-line period.

Note that the data manager 22b may delete the transmitted input data D1. As a result, it is possible to prevent a storage region of the storage 21 from being compressed by the input data D1. The deletion of the input data D1 may be automatically performed or may be performed based on an operation of the input section 25. When the deletion of the input data D1 is automatically performed, a timing of the deletion is not particularly limited. For example, the deletion may be performed immediately after the transmission, immediately after it is confirmed that the transmission has been appropriately performed, after a predetermined period of time has elapsed from the transmission, when a next off-line state is entered, when a next on-line state is entered, or the like.

Furthermore, a method of thinning the input data D1 accumulated during the period of the off-line state is not limited to the above. For example, it may be determined whether thinning is to be performed in accordance with a total amount of the input data D1 accumulated during the period of the off-line state. For example, when the total amount of the input data D1 accumulated during the period of the off-line state is equal to or less than a predetermined amount, the transmission controller 22d transmits all the input data D1 accumulated during the period of the off-line state to the data collection section 10. When the total amount exceeds the predetermined amount, the transmission controller 22d transmits, to the data collection section 10, a portion of the input data D1 accumulated during the period of the off-line state, starting from data corresponding to a time closest to a current time and going backward in time, such that the total amount becomes equal to or less than the predetermined amount. Furthermore, for example, priorities may be set to the input data D1 in accordance with contents of the inputs, and the input data D1 having higher-priority content among the input data D1 accumulated during the period of the off-line state may be preferentially transmitted to the data collection section 10.

A timing at which at least a portion of the input data D1 accumulated during the period of the off-line state is transmitted to the data collection section 10 may be the same as or different from a timing at which the latest input data D1 is transmitted to the data collection section 10.

The transmission controller 22d transmits the summary data D2 to the data collection section 10 via the communication section 23 when the user operates the input section 25 to instruct termination of the support software and the state is the on-line state. Note that, when there is a period of the off-line state before this, the summary data D2 including a cumulative total for each input content during the period of the off-line state is transmitted to the data collection section 10.

Since the summary data D2 is single data, even when the period of the off-line state is relatively long, it is possible to reduce a load of communication between the data transmission apparatus 20 and the data collection section 10 when the summary data D2 is transmitted, and an error is unlikely to occur during the communication. As a result, while a communication load is suppressed, the data collector can easily grasp contents of inputs made on the data transmission apparatus 20 during execution of the support software, in both the on-line state and the off-line state. In particular, since there is a possibility that the input data D1 accumulated during the off-line period is thinned, the data collector can grasp contents of inputs during the period of the thinning with reference to the summary data D2.

When the transmission of the summary data D2 is completed, the processing section 22 terminates the support software. During the transmission of the summary data D2, the program window of the support software may be kept open to display that the data is being transmitted, or the program window may be closed.

Furthermore, a timing of transmitting the summary data D2 to the data collection section 10 is not limited to the above. For example, the summary data D2 may be transmitted to the data collection section 10 at predetermined time intervals, may be transmitted to the data collection section 10 simultaneously with the input data D1, may be transmitted to the data collection section 10 each time the summary data D2 is updated, may be transmitted to the data collection section 10 at a timing at which a predetermined operation or a predetermined process is performed, such as a timing at which the user operates the input section 25 to activate the support software, or may be transmitted to the data collection section 10 at a timing at which switching from the off-line state to the on-line state is detected.

Next, the data collection section 10 will be described.

The data collection section 10 is not particularly limited, but is configured by a server, such as a physical server or a cloud server. Note that the data collection section 10 may be configured by a personal computer, a tablet terminal, a smartphone, or the like of the data collector. The number of pieces of hardware, such as servers, constituting the data collection section 10 may be one or more. In the latter case, a blockchain may be configured by a plurality of pieces of hardware. As illustrated in FIG. 2, the data collection section 10 includes a storage 11, a processing section 12, and a communication section 13, which are connected to each other via a bus.

The storage 11 is configured by memories, such as a RAM and a ROM. The storage 11 stores various programs and various data, such as the input data D1 and the summary data D2 acquired from each of the data transmission apparatuses 20.

The processing section 12 is constituted by at least one processor, such as a CPU. The processing section 12 reads and executes various programs stored in the storage 11. An identification name, such as a user ID or a unique identification number of the robot 30, is set in each of the data transmission apparatuses 20. The processing section 12 stores the input data D1 and the summary data D2 acquired from each of the data transmission apparatuses 20 in the storage 11 in association with the identification name. Furthermore, the processing section 12 may generate analysis data obtained by analyzing the acquired input data D1 and the acquired summary data D2. The analysis data is not particularly limited. Examples of the analysis data may include ranking data in which input contents are arranged in descending order of the number of inputs, and statistical data, such as an average, a variance, and a standard deviation of the number of inputs for each input content, with respect to all the data transmission apparatuses 20 or each of the data transmission apparatuses 20.

The communication section 13 includes various interfaces capable of communicating with an external device, such as the individual data transmission apparatuses 20. The communication section 13 includes an interface circuit. The communication section 13 transmits and receives information and signals to and from each of the data transmission apparatuses 20 via the network N1.

The data collector acquires the input data D1 and the summary data D2 of each of the data transmission apparatuses 20 from the storage 11 of the data collection section 10, and can efficiently perform, for example, analysis of the use state of the support software of the user, improvement of the support software, and the like with reference to the input data D1 and the summary data D2.

Next, a data collection method according to this embodiment will be described.

FIG. 3 is a flowchart of a data collection method according to this embodiment.

The data collection method according to this embodiment, as outlined with reference to FIG. 3, includes step S1 of determining whether input has been made, step S2 of generating input data D1 and updating summary data D2, step S3 of determining whether a state is an on-line state, and step S4 of transmitting the input data D1. The data collection method further includes step S5 of determining whether an operation for instructing termination of the support software is received, step S6 of determining whether a state is an on-line state, and step S7 of transmitting the summary data D2. Hereinafter, the individual steps will be described in detail.

First, a description will be given of a case where the user starts and terminates the support software in the on-line state. When the support software is activated, the receiver 22a displays a program window including an activation screen of the support software on the display section 24. Then, the receiver 22a receives input by a user's operation of the input section 25, and determines whether input has been made (step S1).

In step S1, when it is determined that input has been made (S1: Yes), the data manager 22b generates input data D1 and updates summary data D2 (step S2). Step S2 corresponds to a "data generation step" of generating, when the data transmission apparatus 20 receives input, input data D1 and updating summary data D2 based on the input. When it is determined that input has not been performed in step S1 (S1: No), the processing section 22 continuously receives input by an operation of the input section 25 by the user.

Next, the determination section 22c determines whether a state is the on-line state (step S3). Since the state is the on-line state in the current activation, it is determined in step S3 that the state is the on-line state (S3: Yes), and the transmission controller 22d transmits the latest input data D1 to the data collection section 10 (step S4). Therefore, step S4 corresponds to a "first transmission step" of transmitting the input data D1 indicating content of the latest input to the data collection section 10 in the on-line state.

Note that step S3 and step S4 may be performed at predetermined time intervals. In this case, as will be described later, while step S1, step S2, and step S5 are repeatedly performed, step S3 and step S4 are performed at predetermined time intervals.

Subsequently, the processing section 22 determines whether an operation of instructing termination of the support software has been received (step S5). When it is determined that the operation of instructing termination of the support software has not been received in step S5 (S5: No), the process from step S1 to step S5 is repeatedly performed until the operation of instructing termination of the support software is received. Therefore, the data collection section 10 can acquire a series of or time-series input data D1 during the period of the on-line state. Thus, the data collector can efficiently grasp the detailed use state of the support software, such as an order of inputs in the on-line state.

In a case where it is determined that the operation of instructing termination of the support software is performed in step S5 (S5: Yes), the determination section 22c determines whether the state is an on-line state (step S6).

Since the state is the on-line state in the current activation, it is determined in step S6 that the state is the on-line state (S6: Yes), and the transmission controller 22d transmits the summary data D2 to the data collection section 10 (step S7). Thus, the data collection section 10 can acquire the summary data D2 including a cumulative total for each input content during the period of the on-line state. Therefore, the data collector can efficiently grasp statistics of use states of the support software, such as an input content having a large number of inputs during the period of the on-line state, that is, an input content with high demand.

Next, the processing section 22 terminates the support software.

Next, a case where the user activates and terminates the support software in the off-line state will be described. When the support software is activated, the process from step S1 to step S3 is performed as in the on-line state.

Since the state is the off-line state in the current activation, the determination section 22c determines in step S3 that the on-line state is not established (S3: No), and step S5 is performed without transmitting the input data D1 to the data collection section 10.

Then, the process in step S1, S2, S3, and S5 is repeatedly performed until it is determined that the operation of instructing termination of the support software is received in the step S5. As a result, the untransmitted input data D1 is accumulated in the storage 21 during the period of the off-line state. Therefore, step S2 during the period of the off-line state corresponds to an "accumulation step" in which the input data D1 is accumulated during the period of the off-line state. Furthermore, as a result, the summary data D2 in the storage 21 is updated so as to include a cumulative total for each input content during the period of the off-line state.

Then, when it is determined that the operation of instructing termination of the support software is performed in step S5 (S5: Yes), the determination section 22c determines whether the state is the on-line state (step S6).

Since the state is the off-line state in the current activation, it is determined in step S6 that the state is not the on-line state (S6: No), and the processing section 22 terminates the support software without transmitting the summary data D2 to the data collection section 10.

Next, a case where the user activates the support software in the on-line state and terminates the support software after the activation and termination in the off-line state described above will be described. When the support software is activated, the process from step S1 to step S3 is performed.

Since the state is the on-line state in the current activation, it is determined in step S3 that the state is the on-line state (S3: Yes), and the transmission controller 22d transmits the latest input data D1 and at least a portion of the input data D1 accumulated in the off-line state to the data collection section 10 (step S4). Therefore, step S4 in the current activation corresponds to both the first transmission step and a "third transmission step" of transmitting at least a portion of the accumulated input data D1 to the data collection section 10 when the off-line state is switched to the on-line state.

Note that, as described above, at this time, the transmission controller 22d determines whether to thin the untransmitted input data D1 accumulated according to an accumulation period. This makes it possible to adjust an amount of the input data D1 to be transmitted from the data transmission apparatus 20 to the data collection section 10 when the off-line state is switched to the on-line state. Accordingly, the data collection section 10 can acquire at least a portion of the input data D1 accumulated during the period of the off-line state.

Subsequently, the processing section 22 determines whether an operation of instructing termination of the support software has been received (step S5). When it is determined that the operation of instructing termination of the support software has not been received in step S5 (S5: No), the process from step S1 to step S5 is repeatedly performed until the operation of instructing termination of the support software is received.

In a case where it is determined that the operation of instructing termination of the support software is received in step S5 (S5: Yes), the determination section 22c determines whether the state is the on-line state (step S6).

Since the state is the on-line state in the current activation, it is determined in step S6 that the state is the on-line state (S6: Yes), and the transmission controller 22d transmits the summary data D2 to the data collection section 10 (step S7). The summary data D2 includes a cumulative total of the number of inputs for each input content during the period of the off-line state. Therefore, in a case where the off-line state is switched to the on-line state, step S7 in the current activation corresponds to a "second transmission step" of transmitting the summary data D2 including a cumulative total of the number of inputs for each input content during the period of the off-line state to the data collection section 10.

Thus, the data collection section 10 can acquire the summary data D2 including the cumulative total for each input content during the period of the off-line state. Therefore, the data collector can efficiently grasp statistics of use states of the support software, such as an input content having a large number of inputs during a period of the off-line state, that is, an input content with high demand. In particular, although there is a possibility that the input data D1 accumulated during the off-line period is thinned, the data collector can grasp contents of inputs during the period of the thinning with reference to the summary data D2.

Next, the processing section 22 terminates the support software.

Note that, in the above example, the case where the on-line state is maintained in a single execution of the support software and the case where the off-line state is maintained in a single execution of the support software have been described. However, the on-line state and the off-line state may be switched during a single execution of the support software. Also in such a case, it is appropriately determined whether the state is the on-line state in accordance with the flowchart illustrated in FIG. 3, and it is determined whether to transmit the input data D1 and the summary data D2. Furthermore, regardless of whether the off-line state is switched to the on-line state, in step S4, it may be always determined whether the untransmitted input data D1 in the storage 21 is to be thinned.

The summary data D2 may include at least a cumulative total of the number of inputs for each input content during the period of the off-line state, and may be transmitted to the data collection section 10 at least when the off-line state is switched to the on-line state. Therefore, the summary data D2 may not include a cumulative total for each input content during the period of the on-line state. In addition, when the summary data D2 is transmitted to the data collection section 10 once, the number of inputs of the summary data D2 may be reset to 0. In this case, in consideration of the fact that the summary data D2 is reset each time the summary data D2 is transmitted, the data collection section 10 may be configured not to overwrite previously acquired summary data D2 with the latest acquired summary data D2.

Furthermore, when the off-line state is switched to the on-line state, the input data D1 during the period of the off-line state may not be transmitted to the data collection section 10. Furthermore, the input data D1 may not be generated during the period of the off-line state. Even when the data collection section 10 does not acquire the input data D1 during the period of the off-line state, the data collection section 10 can acquire the summary data D2 including a cumulative total for each input content during the period of the off-line state. This is because the data collector can grasp, from the summary data D2, contents of inputs performed during the execution of the support software in the data transmission apparatus 20.

As described above, the data collection method according to this embodiment is a data collection method for collecting data from the data transmission apparatus 20 that receives a predetermined input related to the support software (a predetermined software program) while the support software is running. The data collection method includes the first transmission step and the second transmission step. In the first transmission step, when the data transmission apparatus 20 is in an on-line state in which the data transmission apparatus 20 is connected to the external data collection section 10 via the network N1, the data transmission apparatus 20 transmits the input data D1 indicating the content of the latest input to the data collection section 10. In the second transmission step, when the data transmission apparatus 20 is switched from the off-line state in which the data transmission apparatus 20 is not connected to the data collection section 10 to the on-line state, the data transmission apparatus 20 transmits, to the data collection section 10, the summary data D2 including a cumulative number of inputs for each input content during the period of the off-line state.

In this way, the data collection section 10 can acquire the input data D1 during the on-line state. Therefore, the data collector can grasp a content of an input performed while the support software is running in the data transmission apparatus 20 from the input data D1. During the off-line state, the data collection section 10 can acquire the summary data D2. Since the summary data D2 is a single data item, even when the period of the off-line state is relatively long, it is possible to reduce a load of communication between the data transmission apparatus 20 and the data collection section 10 when transmitting the summary data D2 at a time of returning from the off-line state to the on-line state. As described above, it is possible for the data collector to grasp a content of an input performed during the execution of the support software in the data transmission apparatus 20 in both of the on-line state and the off-line state while a communication load is suppressed. Therefore, the data collector can efficiently perform, for example, analysis of the use state of the support software of the user, improvement of the support software, and the like with reference to the collected data.

In particular, in the industrial robot 30, the data transmission apparatus 20 connected to the robot 30 is often in the off-line state until a timing of maintenance or the like of the robot 30 after the robot 30 is installed in a manufacturing line. As described above, when the period of the off-line state is prolonged, even when the input data D1 is accumulated during the off-line period and the accumulated input data D1 is to be transmitted at a time of returning from the off-line state to the on-line state, a communication load increases depending on a total amount of the accumulated input data D1, and the transmission may be difficult. Therefore, as described above, by transmitting the summary data D2 at the time of returning from the off-line state to the on-line state, it is possible to more reliably acquire the summary data D2 while a communication load is reduced.

Furthermore, the data collection method according to this embodiment further includes the data generation step in which, when the data transmission apparatus 20 receives input, the data transmission apparatus 20 generates input data D1 and updates summary data D2 based on the input.

As described above, since the input data D1 is generated each time an input is received, the data collector can easily grasp in detail the content of the input performed while the support software is running in the data transmission apparatus 20. Furthermore, since the summary data D2 is updated when the data transmission apparatus 20 receives an input, even when the generated past input data D1 is damaged or deleted by mistake, it is possible to suppress omission of updating the summary data D2.

Furthermore, in the second transmission step, the data transmission apparatus transmits the summary data D2 to the data collection section 10 when receiving an operation for instructing termination of the support software.

Therefore, the data collector can grasp contents of inputs made on the data transmission apparatus 20 during a single execution of the support software. Consequently, the data collector can more efficiently perform analysis of the use state of the support software, improvement of the support software, and the like.

Furthermore, in the first transmission step, the input data D1 is transmitted to the data collection section 10 at predetermined time intervals.

Therefore, the input data D1 within the predetermined time interval can be collectively transmitted to the data collection section 10. Accordingly, the frequency of communication between the data transmission apparatus 20 and the data collection section 10 can be suppressed. Moreover, by transmitting the input data D1 at predetermined time intervals, it is possible to suppress omission of transmitting (collecting) the input data D1.

Furthermore, in the first transmission step, the input data D1 may be transmitted to the data collection section 10 each time the input data D1 is generated.

In this case, it is possible to further suppress omission of transmitting (collecting) the input data D1.

The input is performed by an operation of the input section 25 of the data transmission apparatus 20, and the input data D1 includes an operation log related to the operation.

Therefore, the data collector can more efficiently perform analysis of a use state of the support software of the user, improvement of the support software, and the like by analyzing an operation having a high demand for the user from the operation log.

The data collection method according to this embodiment further includes the accumulation step and the third transmission step. In the accumulation step, the input data D1 is accumulated in the off-line state. In the third transmission step, the data transmission apparatus 20 determines whether the accumulated input data D1 is to be thinned based on an amount of the accumulated input data D1 or an accumulation period and transmits at least a portion of the accumulated input data D1 to the data collection section 10 in accordance with the determination, when the off-line state is switched to the on-line state.

Therefore, when the off-line state returns to the on-line state, the data collection section 10 can acquire not only the summary data D2 but also at least a portion of the input data D1 accumulated during the period of the off-line state. Thus, at the time of returning from the off-line state to the on-line state, the data collector can efficiently grasp a time-series detailed use state of the support software during the period of the off-line state while an amount of the input data D1 to be transmitted to the data collection section 10 is suppressed. Furthermore, even when the accumulated input data D1 is thinned and transmitted, the data collector can grasp contents of inputs performed while the support software is running in the data transmission apparatus 20 from the summary data D2.

Furthermore, the data transmission apparatus 20 according to this embodiment includes the receiver 22a, the communication section 23, and the transmission controller 22d. The receiver 22a receives a predetermined input related to the support software while the support software is running. The communication section 23 can be connected to the external data collection section 10 via the network N1. In the on-line state in which the communication section 23 is connected to the data collection section 10 via the network N1, the transmission controller 22d transmits the input data D1 indicating content of the latest input to the data collection section 10 via the communication section 23. When the off-line state in which the communication section 23 is not connected to the data collection section 10 is switched to the on-line state, the transmission controller 22d transmits the summary data D2 including a cumulative number of inputs for each input content during the period of the off-line state to the data collection section 10 via the communication section 23.

As a result, while a communication load is suppressed, the data collector can easily grasp contents of inputs performed on the data transmission apparatus 20 during execution of the support software, in both the on-line state and the off-line state. Therefore, the data collector can efficiently perform, for example, analysis of the use state of the support software of the user, improvement of the support software, and the like with reference to the collected data.

Furthermore, the data collection system 1 according to this embodiment includes the data collection section 10 and the data transmission apparatus 20. The data transmission apparatus 20 includes the receiver 22a, the communication section 23, and the transmission controller 22d. The receiver 22a receives a predetermined input related to the support software while the support software is running. The communication section 23 can be connected to the external data collection section 10 via the network N1. In the on-line state in which the communication section 23 is connected to the data collection section 10 via the network N1, the transmission controller 22d transmits the input data D1 indicating a content of the latest input to the data collection section 10 via the communication section 23. When the off-line state in which the communication section 23 is not connected to the data collection section 10 is switched to the on-line state, the transmission controller 22d transmits the summary data D2 including a cumulative number of inputs for each input content during the period of the off-line state to the data collection section 10 via the communication section 23.

As a result, while a communication load is suppressed, the data collector can easily grasp contents of inputs performed on the data transmission apparatus 20 during execution of the support software, in both the on-line state and the off-line state. Therefore, the data collector can efficiently perform, for example, analysis of the use state of the support software of the user, improvement of the support software, and the like with reference to the collected data.

Note that, in the first transmission step, the second transmission step, and the third transmission step, when the data transmission apparatus 20 transmits at least one of the input data D1 and the summary data D2, all or a portion of the input data D1 and the summary data D2 may be compressed and transmitted, and the data collection section 10 may decompress and use the received compressed data. This makes it possible to further reduce a load of the communication between the data transmission apparatus 20 and the data collection section 10. The compression of data is performed by the processing section 22 of the data transmission apparatus 20, and the decompression of compressed data is performed by the processing section 12 of the data collection section 10.

The selection of whether to compress the data may be automatically performed, or may be performed based on an operation of the input section 25. In the case where the data compression is automatically performed, for example, it may be determined whether an amount of data to be transmitted exceeds a predetermined threshold value, and the data compression may be performed when the threshold value is exceeded.

On the other hand, a configuration may be employed in which the above-described data compression is performed on data accumulated in the data transmission apparatus 20, and the compressed data is decompressed immediately before being transmitted to the data collection section 10, and then the data is transmitted. In this case, the compression of data is performed by the data manager 22b of the data transmission apparatus 20, and the decompression of compressed data is performed by the transmission controller 22d of the data transmission apparatus 20. According to this configuration, since an amount of data stored in the data transmission apparatus 20 can be reduced, a larger amount of data can be stored in a predetermined storage region.

Note that, in the first transmission step, the second transmission step, and the third transmission step, when the data transmission apparatus 20 transmits at least one of the input data D1 and the summary data D2, all or a portion of the input data D1 and the summary data D2 may be encrypted and transmitted, and the data collection section 10 may decrypt and use the received encrypted data. Consequently, it is possible to further improve security and confidentiality in the communication between the data transmission apparatus 20 and the data collection section 10.

The encryption of data is performed by the processing section 22 of the data transmission apparatus 20, and the decryption of encrypted data is performed by the processing section 12 of the data collection section 10. The selection of whether to encrypt the data may be automatically performed, or may be performed based on an operation of the input section 25. When data is automatically encrypted, for example, it may be determined whether a security level of the data to be transmitted is higher than a reference, and the data may be encrypted when the security level exceeds the reference. Note that, in the first transmission step, the second transmission step, and the third transmission step, the compression/decompression and the encryption/decryption of the data may be appropriately combined.

Although the data collection method, the data transmission apparatus, and the data collection system according to the present disclosure have been described with reference to the embodiment illustrated in the drawings, the present disclosure is not limited thereto. Furthermore, each of the steps and each of the sections of the data collection method, the data transmission apparatus, and the data collection system can be replaced with an arbitrary step and an arbitrary component that can exhibit the same function. Moreover, an arbitrary step or an arbitrary component may be added.

## Claims

1. A data collection method for collecting data from a data transmission apparatus that receives a predetermined input related to a predetermined software program while the software program is running, the data collection method comprising:
a first transmission step of transmitting, when the data transmission apparatus is in an on-line state in which the data transmission apparatus is connected to an external data collection section via a network, input data indicating content of the latest input, from the data transmission apparatus to the data collection section; and
a second transmission step of transmitting, when the data transmission apparatus is switched from an off-line state in which the data transmission apparatus is not connected to the data collection section to the on-line state, summary data including a cumulative number of inputs for each of the input content during a period in which the data transmission apparatus is in the off-line state, from the data transmission apparatus to the data collection section.

2. The data collection method according to claim 1, further comprising: a data generation step of generating the input data and updating the summary data based on the input by the data transmission apparatus, when the data transmission apparatus receives the input.

3. The data collection method according to claim 1, wherein
in the second transmission step, the data transmission apparatus transmits the summary data to the data collection section when the data transmission apparatus receives an operation instructing termination of the software program.

4. The data collection method according to claim 1, wherein
in the first transmission step, the input data is transmitted to the data collection section at predetermined time intervals.

5. The data collection method according to claim 1, wherein
in the first transmission step, the input data is transmitted to the data collection section each time the input data is generated.

6. The data collection method according to claim 1, wherein
the input is made by operation of an input section of the data transmission apparatus, and
the input data includes an operation log regarding the operation.

7. The data collection method according to claim 1, further comprising:
an accumulation step of accumulating the input data in the off-line state; and
a third transmission step of determining, by the data transmission apparatus, whether the accumulated input data is to be thinned based on an amount of the accumulated input data or an accumulation period and transmitting, by the data transmission apparatus, at least a portion of the accumulated input data to the data collection section in accordance with the determination, when the off-line state is switched to the on-line state.

8. A data transmission apparatus, comprising:
a receiver that receives a predetermined input related to a predetermined software program while the software program is running;
a communication section that is connectable to an external data collection section via a network; and
a transmission controller that transmits, when an on-line state is entered in which the communication section is connected to the data collection section via the network, input data indicating content of the latest input to the data collection section via the communication section and transmits, when the communication section is switched from an off-line state in which the communication section is not connected to the data collection section to the on-line state, summary data including a cumulative number of inputs for each of the input content during a period of the off-line state to the data collection section via the communication section.

9. A data collection system, comprising:
a data collection section; and
a data transmission apparatus, wherein
the data transmission apparatus includes
a receiver that receives a predetermined input related to a predetermined software program while the software program is running,
a communication section that is connectable to the data collection section via a network, and
a transmission controller that transmits, when an on-line state is entered in which the communication section is connected to the data collection section via the network, input data indicating content of the latest input to the data collection section via the communication section and transmits, when the communication section is switched from an off-line state in which the communication section is not connected to the data collection section to the on-line state, summary data including a cumulative number of inputs for each of the input content during a period of the off-line state to the data collection section via the communication section.
